# EUROPÄISCHE PATENTSCHRIFT

(11) **EP 2 159 456 B1**
(45) Veröffentlichungstag und Bekanntmachung des Hinweises auf die Patenterteilung: **19.10.2011**
(21) Anmeldenummer: 09167475.4
(22) Anmeldetag: 07.08.2009
(51) Int. Cl.: F16H 59/66, F16H 61/688, F16H 63/48

(54) **Verfahren zum Steuern eines automatisierten Schaltgetriebes**
Method for controlling an automated shift transmission
Procédé de commande d`une boîte de vitesses automatisée

(30) Priorität: 25.08.2008 DE 102008039452
(43) Veröffentlichungstag der Anmeldung: 03.03.2010
(73) Patentinhaber: Getrag Ford Transmissions GmbH, 50735 Köln (DE)
(72) Erfinder: Leibbrandt, Martin, Dr., 50181 Bedburg (DE); Eggert, Ulrich, 41751 Viersen (DE)

(56) Entgegenhaltungen:
- EP-A- 1 681 497
- EP-A1- 1 443 248
- WO-A-02/055903
- WO-A-03/095871
- DE-A1- 10 109 662
- DE-A1- 19 950 696
- DE-A1-102007 019 241

## Beschreibung

Die Erfindung betrifft ein Verfahren zum Steuern eines automatisierten Schaltgetriebes, das in einem Kraftfahrzeug eingebaut ist, mehrere Vorwärtsgänge und wenigstens einen Rückwärtsgang umfasst und für das durch einen Wählhebel unterschiedliche Fahrstufen ausgewählt werden können.

Aus der DE 101 09 662 A1 ist ein Verfahren zur Steuerung eines automatisierten Schaltgetriebes in Form eines Doppelkupplungsgetriebes bekannt, das ein erstes Teilgetriebe, dem eine erste Kupplung und eine erste Gruppe von Gängen zugeordnet ist, und ein zweites Teilgetriebe umfasst, dem eine zweite Kupplung und eine zweite Gruppe von Gängen zugeordnet ist, wobei in einem Richtungswechselmodus, in dem mehrfach die Vorwärts- und Rückwärtsfahrt des Kraftfahrzeugs gewechselt wird, ein dem einen Teilgetriebe zugeordneter Vorwärtsgang und ein dem anderen Teilgetriebe zugeordneter Rückwärtsgang permanent eingelegt gehalten werden, und wobei ein Fahrtrichtungswechsel durch wechselweises Öffnen der dem einem Teilgetriebe zugeordneten Kupplung und Schließen der dem anderen Teilgetriebe zugeordneten Kupplung erfolgt. Ein derartiger Richtungswechselmodus ist beispielsweise beim Rangieren in und aus Parklücken oder beim Freischaukeln im Schnee hilfreich. Da aufgrund der permanent eingelegten Gänge bei einem Fahrtrichtungswechsel nur die Kupplungen und nicht auch Gangschaltkupplungen, mit denen sich die einzelnen Gänge ein- und auslegen lassen, betätigt werden müssen, kann dieser Fahrtrichtungswechsel relativ schnell und verschleißfrei durchgeführt werden. Somit trägt das Verfahren zum Steuern des Doppelkupplungsgetriebes zum Fahrkomfort bzw. zur Langlebigkeit des Kraftfahrzeugs bei. In der EP 1 681 497 A2 wird ebenfalls ein Verfahren zur Steuerung eines Doppelkupplungsgetriebes beschrieben, das zum Fahrkomfort des Kraftfahrzeugs beiträgt. Bei dem hier vorgestellten Verfahren soll ein unerwünschtes Ankriechen des Fahrzeugs bei tiefen Temperaturen vermieden werden.

Das unerwünschte Ankriechen des Kraftfahrzeugs soll dadurch vermieden werden, dass bei dem Doppelkupplungsgetriebe in einem der Teilgetriebe ein Vorwärtsgang und in dem anderen der Teilgetriebe ein Rückwärtsgang eingelegt gehalten werden, wenn für das Doppelkupplungsgetriebe bei Stillstand des Kraftfahrzeugs eine Nichtfahrstufe (Parkstufe oder Leerlaufstufe) ausgewählt worden ist. Durch die eingelegten Gänge lassen sich etwaig auftretende Schleppmomente, die trotz geöffneter Kupplungen aufgrund der hohen Viskosität des Kupplungsfluids bei niedrigen Temperaturen an den Kupplungen anliegen können, soweit gegenseitig aufheben, dass das Fahrzeug nicht in einen kriechenden Zustand versetzt wird.

Für weitere oder besondere Fahrbedingungen des Kraftfahrzeugs, beispielsweise ein Anfahren an einer Steigung bergauf oder bergab, ist eine spezifische Steuerung des Doppelkupplungsgetriebes wünschenswert. Jedoch bedarf es hierfür eines Sensors oder eines vorgeschalteten Verfahrens, um die besondere Fahrbedingung zu erfassen. Im Falle einer Steuerung beim Anfahren des Kraftfahrzeugs an einer Steigung wäre z.B. ein Steigungssensor oder eine Auswertung der Fahrzeugbeschleunigung unter Zugrundelegung einer Fahrwiderstandskurve notwendig. Hauptproblem beim Erkennen einer Steigung mit Hilfe der Fahrwiderstandskurve ist, dass dazu das Kraftfahrzeug in Bewegung sein muss. Wacht das für die Steuerung des Doppelkupplungsgetriebes vorgesehene Steuergerät jedoch gerade auf oder ist das Kraftfahrzeug im Stillstand, so kann keine Information über die Steigung gewonnen werden, um z.B. das Anfahrverhalten am Berg zu modifizieren. Somit müsste ein Steigungssensor vorgehalten werden, was jedoch mit zusätzlichen Kosten verbunden wäre.

Aus der gattungsbildenden DE 199 50 696 A1 ist ein Doppelkupplungsgetriebe bekannt, welches eine erste Eingangswelle, die einem erstes Teilgetriebe zugeordnet werden kann, und eine zweite Eingangswelle aufweist, die einem zweiten Teilgetriebe zugeordnet werden kann. Zur Realisierung einer Parksperrenfunktion werden zwei Gänge eines gleichen Teilgetriebes geschaltet, wodurch das entsprechende Teilgetriebe verspannt und somit zu einer Blockierung führt. Um diese Verspannung wieder lösen zu können, wird vorgeschlagen, bei einem an einer Gefällstrecke abgestellten Kraftfahrzeug den Rückwärtsgang zu nutzen. Bei einem an einer Steigung abgestellten Kraftfahrzeug soll hingegen bevorzugt ein Vorwärtsgang zum Abbau der Verspannung eingesetzt werden. Das Erkennen der Verspannung und deren Abbau ist jedoch mit Aufwand verbunden.

Die EP 1 443 248 A1 offenbart ein Kraftfahrzeug mit einem Getriebe, das Gangschaltkupplungen in Form von formschlüssigen Kupplungen und eine Reibkupplung aufweist. Die Reibkupplung wird genutzt, um beim Schalten zwischen zwei Gängen Drehmoment bereitzustellen, um einen Schaltvorgang möglichst ohne Zugkraftunterbrechung zu ermöglichen. Das Getriebe wird bevorzugt in einem Antriebsstrang mit Motor und einer zwischen Motor und Getriebe angeordneten Hauptreibkupplung eingesetzt.

Wenn das Kraftfahrzeug zum Parken abgestellt werden soll, werden, solange noch eine Ölpumpe arbeitet, der erste Gang über eine Gangschaltkupplung eingelegt und die Reibkupplung, welche als normally-open Kupplung ausgelegt ist, geschlossen, wodurch das Getriebe verspannt wird. Durch den nachlassenden Öldruck öffnet sich die Reibkupplung wieder, während die Hauptreibkupplung, als normally-closed Kupplung ausgelegt, schließt und somit eine Verbindung zwischen Getriebe und ruhendem Motor herstellt. Je nach Neigung des Kraftfahrzeugs (Gefälle/Steigung) wird dabei der erste Gang oder der Rückwärtsgang eingelegt. Dieses Verfahren ist vergleichsweise aufwendig und erfordert eine genaue Ansteuerung von Hauptreibkupplung und Reibkupplung in Abhängigkeit des Abschaltzeitpunktes der Ölpumpe.

Der Erfindung liegt daher die Aufgabe zugrunde, ein Verfahren zum Steuern eines automatisierten Schaltgetriebes bereitzustellen, das besondere Fahrbedingungen oder Fahrsituationen berücksichtigen kann, jedoch mit möglichst einfachen Mitteln durchführbar ist.

Die der Erfindung zugrunde liegende Aufgabe wird mit Anspruch 1 gelöst. Bevorzugte Ausführungsbeispiele können den Unteransprüchen entnommen werden.

Beim Verfahren zum Steuern eines automatisierten Schaltgetriebes gemäß Anspruch 1 werden in einer Parkstufe bei einer bergauf gerichteten Orientierung des Kraftfahrzeugs, welche im Folgenden Bergauf-Stellung genannt wird, ein Vorwärtsgang eingelegt gehalten und bei einer bergab gerichteten Orientierung des Kraftfahrzeugs, welche im Folgenden Bergab-Stellung genannt wird, anstelle des Vorwärtsgangs ein Rückwärtsgang eingelegt gehalten. Wird beispielsweise in der Bergauf-Stellung das Kraftfahrzeug abgestellt, so kann durch den eingelegten Vorwärtsgang in der Parkstufe darauf geschlossen werden, dass sich das Kraftfahrzeug in besagter Bergauf-Stellung befindet. Ist in der Parkstufe der Rückwärtsgang eingelegt, so befindet sich das Kraftfahrzeug in der Bergab-Stellung. Mit diesen Informationen kann auch bei abgestelltem oder stillstehendem Kraftfahrzeug eine steigungsspezifische Anfahrstrategie durchgeführt werden, ohne dass auf einen Steigungssensor zurückgegriffen werden müsste.

Gemäß Anspruch 1 werden in einer Leerlaufstufe bei der Bergauf-Stellung des Kraftfahrzeugs der Vorwärtsgang und bei der Bergab-Stellung des Kraftfahrzeugs anstelle des Vorwärtsgangs der Rückwärtsgang eingelegt gehalten. Wählt beispielsweise bei der Bergauf-Stellung der Fahrer des Kraftfahrzeugs, ausgehend von der Leerlaufstufe eine Vorwärtsfahrstufe, um am Berg vorwärts anzufahren, ist der Vorwärtsgang bereits eingelegt, so dass nur eine Kupplung geschlossen werden muss, um das Drehmoment des Fahrzeugmotors auf die Antriebsräder des Kraftfahrzeugs angreifen zu lassen. Ein unerwünschtes Zurückrollen beim Vorwärtsanfahren am Berg kann somit reduziert oder ganz vermieden werden.

Befindet sich das Kraftfahrzeug hingegen in der Bergab-Stellung und wählt der Fahrer, ausgehend von der Parkstufe oder der Leerlaufstufe eine Rückwärtsfahrstufe, um rückwärts am Berg anzufahren, so kann durch den bereits eingelegten Rückwärtsgang in der Leerlaufstufe N oder in der Parkstufe P durch Schließen der Kupplung schnell ein Drehmoment auf die Antriebsräder geleitet werden. Auch hier kann die Zeit minimiert werden, in der das Kraftfahrzeug Gefahr läuft, aufgrund der Steigung in eine unerwünschte Richtung zu rollen.

Um einen hohen Anfahrkomfort, d.h. eine geringe Anfahrdrehzahl des Fahrzeugmotors, und einen geringen Kupplungsverschleiß, d.h. geringe Drehzahlunterschiede in der Kupplung, zu erreichen, wird zweckmäßig der kleinste der Vorwärtsgänge bei der Bergauf-Stellung eingelegte gehalten. Entsprechend ist bei der Bergab-Stellung des Kraftfahrzeugs der eingelegte Rückwärtsgang vorzugsweise der kleinste von mehreren Rückwärtsgängen, soweit mehrere Rückwärtsgänge vorgesehen sind.

Bei der Bergauf-Stellung des Kraftfahrzeugs kann in der Rückwärtsfahrstufe der Vorwärtsgang eingelegt gehalten werden, so lange eine Betriebsbremse des Kraftfahrzeugs betätigt gehalten wird. Dadurch wird vermieden, dass beim langsamen Wechseln von der Parkstufe zu der Vorwärtsfahrstufe, bei dem üblicherweise der Wählhebel Positionen durchläuft, durch die zunächst die Rückwärtsfahrstufe und dann die Leerlauffahrstufe ausgewählt werden, bei der Bergauf-Stellung kurzzeitig der Vorwärtsgang ausgelegt wird, was zu einem verzögerten Anfahren in der Vorwärtsfahrstufe führen könnte.

Das automatisierte Schaltgetriebe ist vorzugsweise ein Doppelkupplungsgetriebe, das ein erstes Teilgetriebe, dem eine erste Kupplung und eine erste Gruppe von Gängen zugeordnet ist, und ein zweites Teilgetriebe umfasst, dem eine zweite Kupplung und eine zweite Gruppe von Gängen zugeordnet ist, wobei der Rückwärtsgang und der kleinste Vorwärtsgang dem ersten Teilgetriebe zugeordnet ist. Das erste Teilgetriebe umfasst dabei die ungeraden Vorwärtsgänge (1. Gang, 3. Gang, 5, Gang und ggf. weitere ungerade Gänge), während das zweite Teilgetriebe die geraden Vorwärtsgänge aufweist (2. Gang, 4. Gang, 6. Gang und ggf. weitere gerade Gänge). Damit ist auch bei einem Doppelkupplungsgetriebe aufgrund des eingelegten Ganges im ersten Teilgetriebe (entweder der kleinste Vorwärtsgang oder der Rückwärtsgang) eine eindeutige Bestimmung der Stellung des Kraftfahrzeugs möglich.

In einem bevorzugten Ausführungsbeispiel wird in der Parkstufe und in der Leerlaufstufe ein zweitkleinster Vorwärtsgang, der dem zweiten Teilgetriebe zugeordnet ist, bei der Bergauf-Stellung und/oder der Bergab-Stellung eingelegt gehalten. Bei der Bergab-Stellung des Kraftfahrzeugs kann der in der Parkstufe oder in der Leerlaufstufe bereits eingelegte zweitkleinste Vorwärtsgang zum ersten Anfahren genutzt werden, wenn der Fahrer schnell zur Vorwärtsfahrstufe wechselt. Zu beachten dabei ist, dass durch die Orientierung des Kraftfahrzeugs die Schwerkraft das Vorwärtsanfahren unterstützt.

Bei der Bergab-Stellung kann in der Vorwärtsfahrstufe der Rückwärtsgang eingelegt gehalten werden, so lange die Betriebsbremse des Kraftfahrzeugs betätigt gehalten wird. Diese Maßnahme ermöglicht bei Bergab-Stellung des Kraftfahrzeugs ein schnelles rückwärtiges Anfahren, wenn der Fahrer aus der Vorwärtsfahrstufe den Wählhebel in die Position schiebt, in der die Rückwärtsfahrstufe ausgewählt wird, ohne dass dabei viel Zeit verloren geht, in der das Kraftfahrzeug in die unerwünschte Richtung rollen könnte.

Die Erfassung, ob sich das Kraftfahrzeug in der Bergauf-Stellung oder in der Bergab-Stellung befindet, kann mit Hilfe der Auswertung der Fahrzeugbeschleunigung unter Berücksichtigung der Fahrwiderstandskurve erfolgen. Dabei können Grenzwerte zugrunde gelegt werden, ab denen das Kraftfahrzeug sich in der Bergab-Stellung oder in der Bergauf-Stellung befinden soll. Beispielsweise können diese Grenzwerte für die Bergab-Stellung und die Bergauf-Stellung gleich groß sein (z.B. 5% Gefälle bzw. Steigung), sie können aber auch voneinander differieren (z.B. 5% Steigung und 10% Gefälle). Werden für die Steigung oder für das Gefälle kleinere Werte ermittelt, liegt weder die Bergauf-Stellung noch die Bergab-Stellung vor. In diesem Fall soll sich das Kraftfahrzeug in einer ebenen Stellung befinden.

In der ebenen Stellung des Kraftfahrzeugs kann in der Leerlaufstufe der kleinste Vorwärtsgang und der zweitkleinste Vorwärtsgang eingelegt gehalten werden, so dass bei einem Wechsel von der Leerlaufstufe in die Vorwärtsfahrstufe die beiden kleinsten Gänge schon eingelegt sind und dadurch ein schnelles Anfahren ermöglichen. Diese Vorwahl des kleinsten Vorwahlganges und des zweitkleinsten Vorwärtsganges kann in Abhängigkeit der zuvor gewählten Fahrstufe erfolgen. So werden in einem bevorzugten Ausführungsbeispiel die beiden ersten Vorwärtsgänge in der Leerlaufstufe eingelegt gehalten, wenn zuvor die Rückwärtsfahrstufe ausgewählt gewesen ist. Dadurch wird dem Umstand Rechnung getragen, dass eine Wählfolge Rückwärtsfahrstufe - Leerlauffahrstufe - Rückwärtsfahrstufe gegenüber einer Wählfolge Rückwärtsfahrstufe - Leerlauffahrstufe - Vorwärtsfahrstufe unwahrscheinlicher ist.

Alternativ oder zusätzlich kann bei der ebenen Stellung des Kraftfahrzeugs in der Leerlaufstufe nur der zweitkleinste Vorwärtsgang eingelegt gehalten werden, wenn die zuvor gewählte Fahrstufe die Vorwärtsfahrstufe gewesen ist. Damit bleibt der zweitkleinste Vorwärtsgang bei einem mehrmaligen Wechsel von Rückwärtsfahrstufe zur Vorwärtsfahrstufe eingelegt. Ein derartiger Wechsel ist bei ungeübten Fahrern an Ampeln zu beobachten, um das Kriechen zu unterdrücken.

Mit Hilfe der Zeichnung soll die Erfindung näher erläutert werden.

Es zeigen:
- Figur 1: ein Kraftfahrzeug in einer Bergauf-Stellung mit Angabe von eingelegten Gängen gemäß der Erfindung für unterschiedliche Fahrstufen;
- Figur 2: das Kraftfahrzeug in einer Bergab-Stellung mit Angabe von eingelegten Gängen gemäß der Erfindung für die unterschiedlichen Fahrstufen; und
- Figur 3: schematisch einen Antriebsstrang des Kraftfahrzeugs.

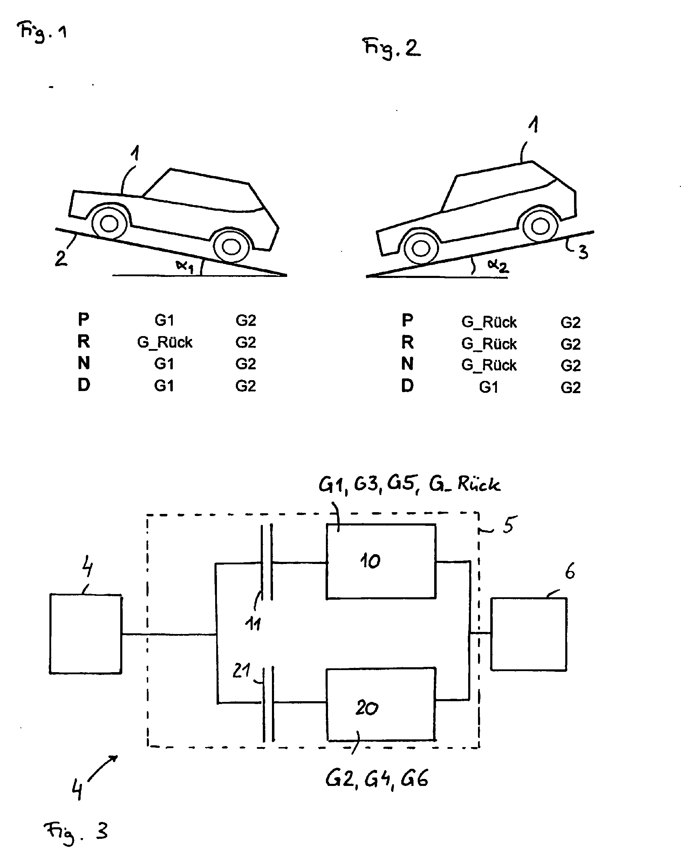

Figur 1 zeigt ein Kraftfahrzeug 1, das eine bergauf gerichtete Orientierung aufweist. Kraftfahrzeug 1 befindet sich dabei auf einer ansteigenden Fahrbahn 2, die gegenüber der Horizontalen einen Steigungswinkel α₁ aufweist. Bei dieser bergauf gerichteten Orientierung des Kraftfahrzeugs gemäß Figur 1 soll es sich um eine Bergauf-Stellung des Kraftfahrzeugs 1 handeln.

In Figur 2 ist das Kraftfahrzeug 1 ebenfalls dargestellt, jedoch nun nicht auf einer ansteigenden Fahrbahn, sondern auf einer abwärts gerichteten Fahrbahn 3. Die abfallende Fahrbahn 3 weist zu der Horizontalen einen Neigungswinkel α₂ auf. Bei der in Figur 2 dargestellten Stellung des Kraftfahrzeugs 1 befindet sich das Kraftfahrzeug 1 in einer Bergab-Stellung, d.h., das Kraftfahrzeug zeigt mit seinem vorderen Ende (Front) nach unten.

In den Figuren 1 und 2 sind zudem Tabellen dargestellt, die jeweils drei Spalten aufweisen. Anhand dieser Tabellen lässt sich das erfindungsgemäße Verfahren erörtern. Darauf wird später näher eingegangen.

Figur 3 zeigt schematisch einen Motor 4, ein Doppelkupplungsgetriebe 5 und einen Abtrieb 6 des Kraftfahrzeugs 1. Das Doppelkupplungsgetriebe 5 stellt dabei ein automatisiertes Schaltgetriebe dar. Das Doppelkupplungsgetriebe 5 umfasst ein erstes Teilgetriebe 10 und ein zweites Teilgetriebe 20. Dem ersten Teilgetriebe 10 sind eine erste Kupplung 11 und drei Vorwärtsgänge G1, G3, G5 sowie ein Rückwärtsgang G_Rück zugeordnet. Dem zweiten Teilgetriebe 20 sind eine zweite Kupplung 21 und drei Vorwärtsgänge G2, G4, G6 zugeordnet. Der Vorwärtsgang G1 soll dabei der kleinste Vorwärtsgang mit größtem Übersetzungsverhältnis des Doppelkupplungsgetriebes 5 sein, während der größte Vorwärtsgang, der Vorwärtsgang G6, das kleinste Übersetzungsverhältnis aufweist. Somit weist das erste Teilgetriebe 10 zwei Anfahrgänge auf, nämlich den kleinsten oder ersten Gang G1 sowie den Rückwärtsgang G_Rück.

Durch das Doppelkupplungsgetriebe ist eine Beschleunigung des Kraftfahrzeugs 1 ohne Zugkraftunterbrechung möglich. Beim Anfahren des Kraftfahrzeugs 1 ist der kleinste Gang G1 eingelegt, so dass beim Schließen der ersten Kupplung 11 ein Drehmoment zwischen Motor 4 und Abtrieb 6 bzw. den Antriebsrädern des Kraftfahrzeugs, übertragen wird. Während der Beschleunigung des Kraftfahrzeugs im ersten Gang bzw. bereits vor dem Anfahren des Kraftfahrzeugs 1 wird in dem zweiten Teilgetriebe 20 der zweitkleinste oder zweite Vorwärtsgang G2 eingelegt. Zum Schalten vom ersten Vorwärtsgang G1 zum zweiten Vorwärtsgang G2 wird in einer Überschneidungsphase die erste Kupplung 11 geöffnet und die zweite Kupplung 21 geschlossen. In der Überschneidungsphase wird immer ein Drehmoment zwischen Motor 4 und Abtrieb 6 übertragen, was zu einer Beschleunigung ohne Zugkraftunterbrechung führt.

Wie oben bereits erwähnt, lässt sich anhand der Tabellen der Figuren 1 und 2 das erfindungsgemäße Verfahren zum Steuern des Doppelkupplungsgetriebes 5 erläutert. In einer jeweils ersten Spalte der Tabellen sind vier unterschiedliche Fahrstufen aufgelistet, die der Fahrer des Kraftfahrzeugs mittels eines manuell betätigbaren Wählhebels auswählen kann. Bei den Fahrstufen handelt es sich im einzelnen um eine Parkstufe P, um eine Rückwärtsfahrstufe R, eine Leerlaufstufe N und eine Vorwärtsfahrstufe D. Der Fahrer wählt über vier entsprechende Positionen des Wählhebels eine der Fahrstufen aus. Die vier Positionen des Wählhebels sind in einer Wählkulisse für den Wählhebel wie die Fahrstufen in der jeweils ersten Spalte der Tabellen der Reihe nach angeordnet. Möchte beispielsweise der Fahrer aus der Parkstufe P in die Vorwärtsfahrstufe D wechseln, so muss er den Wählhebel aus der der Parkstufe P zugeordneten Position über die der Rückwärtsfahrstufe R zugeordneten Position und der der Leerlaufstufe zugeordneten Position in seine Zielposition drücken, durch die letztlich die Vorwärtsfahrstufe D ausgewählt wird.

Die zweite Spalte der Tabelle der Figur 1 zeigt die Gänge, die bei einer Bergauf-Stellung (siehe Figur 1) im ersten Teilgetriebe 10 des Doppelkupplungsgetriebes 5 beim Anfahren eingelegt gehalten werden. In der Parkstufe P ist dabei der kleinste Vorwärtsgang G1 eingelegt. Auch in der Leerlaufstufe N ist der kleinste Vorwärtsgang G1 eingelegt. Für die Rückwärtsfahrstufe R ist der Rückwärtsgang G_Rück eingelegt, während in der Vorwärtsfahrstufe ebenfalls der erste Vorwärtsgang G1 eingelegt ist.

Befindet sich hingegen das Kraftfahrzeug 1 in der Bergab-Stellung (siehe Figur 2), so sind für die einzelnen Fahrstufen P, R, N und D die Gänge eingelegt, wie sie der zweiten Spalte der Tabelle der Figur 2 zu entnehmen sind. Sowohl für die Parkstufe P als auch für die Leerlaufstufe N wird nun der Rückwärtsgang G_Rück eingelegt gehalten.

Das erfindungsgemäße Verfahren bietet den Vorteil, dass aufgrund des in der Parkstufe P eingelegten Ganges G1, G_Rück entschieden werden kann, ob sich das Kraftfahrzeug 1 in der Bergauf-Stellung (Figur 1) oder in der Bergab-Stellung (Figur 2) befindet. Im Stillstand des Kraftfahrzeugs 1 oder beim Hochfahren des Steuergerätes, welches für die Steuerung des Doppelkupplungsgetriebes 5 zuständig ist, lässt sich somit ohne Steigungssensor die grundsätzliche Neigung (Gefälle oder Steigung) des Kraftfahrzeugs 1 bestimmen.

In der jeweils dritten Spalte der Tabellen der Figuren 1 und 2 ist der Gang ausgewiesen, der bei den einzelnen Fahrstufen beim Anfahren in dem zweiten Teilgetriebe 20 eingelegt ist. Es handelt sich jeweils um den zweitkleinsten oder zweiten Vorwärtsgang G2. Befindet sich beispielsweise das Kraftfahrzeug 1 in der Bergauf-Stellung und möchte der Fahrer bergauf oder vorwärts anfahren, drückt er den Wählhebel in die der Vorwärtsgangstufe D entsprechenden Position, wobei der Wählhebel dabei die der Leerlaufstufe N zugeordnete Position passiert oder zumindest aus dieser Position liegend heraus bewegt wird. Da in dieser Leerlaufstufe N bereits der erste Vorwärtsgang G1 eingelegt ist, kann beim Wechsel in die Vorwärtsgangstufe D direkt die erste Kupplung 11 (siehe Figur 3) geschlossen werden, ohne dass in dem ersten Teilgetriebe noch eine Gangschaltkupplung betätigt werden muss. Somit liegt ohne große Verzögerung das Drehmoment des Motors 4 am Abtrieb 6 an, so dass ein ungewolltes Zurückrollen am Berg beim Anfahren vermieden werden kann.

Für die Bergab-Stellung (Figur 2) sieht das erfindungsgemäße Verfahren in den Fahrstufen P, N jeweils den eingelegten Rückwärtsgang G_Rück vor. Wählt nun der Fahrer die Rückfahrstufe R durch seinen Wählhebel aus, erfolgt dies aus der Parkstufe P oder aus der Leerlaufstufe N bzw. über diese. Aufgrund des eingelegten Rückwärtsganges G_Rück in den Fahrstufen P, N kann bei Erreichen der der Rückwärtsfahrstufe R zugeordneten Position des Wählhebels sofort die erste Kupplung 11 geschlossen werden, so dass das Kraftfahrzeug 1 nicht ungewollt erst einmal bergab rollt, bevor es sich dann wie gewünscht bergauf bzw. rückwärts in Gang setzt.

### Bezugszeichenliste

- 1: Kraftfahrzeug
- 2: ansteigende Fahrbahn
- 3: abfallende Fahrbahn
- 4: Motor
- 5: Doppelkupplungsgetriebe
- 6: Abtrieb
- 10: erstes Teilgetriebe
- 11: erste Kupplung
- 20: zweites Teilgetriebe
- 21: zweite Kupplung

## Patentansprüche

1. Verfahren zum Steuern eines automatisierten Schaltgetriebes (5), das in einem Kraftfahrzeug (1) eingebaut ist, mehrere Vorwärtsgänge (G1, ..., G6) und wenigstens einen Rückwärtsgang (G_Rück) umfasst und für das durch einen Wählhebel unterschiedliche Fahrstufen (P, R, N, D) auswählbar sind, wobei in einer Parkstufe (P)
- bei einer bergauf gerichteten Orientierung des Kraftfahrzeugs (1), welche im folgenden Bergauf-Stellung genannt wird, ein Vorwärtsgang (G1) eingelegt gehalten wird und
- bei einer bergab gerichteten Orientierung des Kraftfahrzeugs (1), welche im folgenden Bergab-Stellung genannt wird, anstelle des Vorwärtsgangs (G1) ein Rückwärtsgang (G_Rück) eingelegt gehalten wird,
**dadurch gekennzeichnet, dass** in einer Leerlaufstufe (N)
- bei der Bergauf-Stellung des Kraftfahrzeugs (1) der Vorwärtsgang (G1) eingelegt gehalten wird und
- bei der Bergab-Stellung des Kraftfahrzeugs anstelle des Vorwärtsgangs (G1) der Rückwärtsgang (G_Rück) eingelegt gehalten wird.

2. Verfahren nach Anspruch 1, **dadurch gekennzeichnet, dass** der eingelegte Vorwärtsgang (G1) in der Parkstufe (P) und der Leerlaufstufe (N) der kleinste der Vorwärtsgänge (G1, ..., G6) ist.

3. Verfahren nach Anspruch 1 oder 2, **dadurch gekennzeichnet, dass** der eingelegte Rückwärtsgang (R) der kleinste von mehreren Rückwärtsgängen ist, soweit mehrere Rückwärtsgänge vorgesehen sind.

4. Verfahren nach einem der Ansprüche 1 bis 3, **dadurch gekennzeichnet, dass** bei der Bergauf-Stellung in einer Rückwärtsfahrstufe (R) der Vorwärtsgang (G1) eingelegt gehalten wird, solange eine Betriebsbremse des Kraftfahrzeugs (1) betätigt gehalten wird.

5. Verfahren nach einem der Ansprüche 1 bis 4, **dadurch gekennzeichnet, dass** das automatisierte Schaltgetriebe ein Doppelkupplungsgetriebe (5) ist, das ein erstes Teilgetriebe (10), dem eine erste Kupplung (11) und eine erste Gruppe von Gängen (G1, G3, G5, G_Rück) zugeordnet ist, und das ein zweites Teilgetriebe (20) umfasst, dem eine zweite Kupplung (21) und eine zweite Gruppe von Gängen (G2, G4, G6) zugeordnet ist, wobei der Rückwärtsgang (G_Rück) und der kleinste Vorwärtsgang (G1 dem ersten Teilgetriebe (10) zugeordnet ist.

6. Verfahren nach Anspruch 5, **dadurch gekennzeichnet, dass** ein zweitkleinster Vorwärtsgang (G2), der dem zweiten Teilgetriebe (20) zugeordnet ist, bei Bergauf-Stellung und/oder Bergab-Stellung in der Parkstufe (P) und in der Leerlaufstufe (N) eingelegt gehalten wird.

7. Verfahren nach einem der Ansprüche 5 oder 6, **dadurch gekennzeichnet, dass** bei der Bergab-Stellung in einer Vorwärtsfahrstufe (D) der Rückwärtsgang (G_Rück) eingelegt gehalten wird, solange die Betriebsbremse des Kraftfahrzeugs betätigt gehalten wird.

8. Verfahren nach Anspruch 6 oder 7, **dadurch gekennzeichnet, dass** in einer ebenen Stellung des Kraftfahrzeugs (1) in der Leerlaufstufe (N) der kleinste Vorwärtsgang (G1) und zweitkleinste Vorwärtsgang (G2) eingelegt gehalten wird, insbesondere, wenn die zuvor gewählte Fahrstufe die Rückwärtsfahrstufe (R) gewesen ist.

9. Verfahren nach Anspruch 8, **dadurch gekennzeichnet, dass** bei der ebenen Stellung des Kraftfahrzeugs (1) in der Leerlaufstufe (N) der zweitkleinste Vorwärtsgang (G2) eingelegt gehalten wird, wenn die zuvor gewählte Fahrstufe die Vorwärtsfahrstufe (D) gewesen ist.

## Claims

1. Method for controlling an automated shift gearbox (5) which is installed in a motor vehicle (1), which comprises a plurality of forward gears (G1, ..., G6) and at least one reverse gear (G_Rück) and for which different drive stages (P, R, N, D) can be selected by means of a selector lever, wherein in a park stage (P),
- when the motor vehicle (1) is in an uphill-pointing orientation, referred to hereinafter as uphill position, a forward gear (G1) is kept engaged and,
- when the motor vehicle (1) is in a downhill-pointing orientation, referred to hereinafter as downhill position, a reverse gear (G_Rück) is kept engaged instead of the forward gear (G1),
**characterized in that**, in an idle stage (N),
- when the motor vehicle (1) is in the uphill position, the forward gear (G1) is kept engaged, and
- when the motor vehicle is in the downhill position, the reverse gear (G_Rück) is kept engaged instead of the forward gear (G1).

2. Method according to Claim 1, **characterized in that** the engaged forward gear (G1) in the park stage (P) and in the idle stage (N) is the lowest of the forward gears (G1, ..., G6).

3. Method according to Claim 1 or 2, **characterized in that** the engaged reverse gear (R) is the lowest of a plurality of reverse gears if a plurality of reverse gears is provided.

4. Method according to one of Claims 1 to 3, **characterized in that**, in the uphill position in a reverse drive stage (R), the forward gear (G1) is kept engaged for as long as a service brake of the motor vehicle (1) is held actuated.

5. Method according to one of Claims 1 to 4, **characterized in that** the automated shift gearbox is a double clutch gearbox (5) which comprises a first component gearbox (10), to which a first clutch (11) and a first group of gears (G1, G3, G5, G_Rück) are assigned, and a second component gearbox (20), to which a second clutch (21) and a second group of gears (G2, G4, G6) are assigned, wherein the reverse gear (G_Rück) and the lowest forward gear (G1) are assigned to the first component gearbox (10).

6. Method according to Claim 5, **characterized in that** a second-lowest forward gear (G2) which is assigned to the second component gearbox (20) is kept engaged in the uphill position and/or downhill position in the park stage (P) and in the idle stage (N).

7. Method according to either of Claims 5 and 6, **characterized in that**, in the downhill position in a forward stage (D), the reverse gear (G_Rück) is kept engaged for as long as the service brake of the motor vehicle is held actuated.

8. Method according to Claim 6 or 7, **characterized in that**, in a level position of the motor vehicle (1) in the idle stage (N), the lowest forward gear (G1) and the second-lowest forward gear (G2) are kept engaged, in particular if the previously selected drive stage was the reverse drive stage (R).

9. Method according to Claim 8, **characterized in that**, in the level position of the motor vehicle (1) in the idle stage (N), the second-lowest forward gear (G2) is kept engaged if the previously selected drive stage was the forward drive stage (D).

## Revendications

1. Procédé de commande d'une boîte de vitesses automatisée (5) incorporée dans un véhicule automobile (1), qui comprend plusieurs vitesses de marche avant (G1, ..., G6) et au moins une vitesse de marche arrière (G_Rück) et pour laquelle des rapports de marche différents (P, R, N, D) peuvent être sélectionnés par un levier de sélection, dans lequel, dans un rapport de stationnement (P)
- dans une orientation du véhicule automobile (1) en pente montante, qui est appelée ci-après position en montée, une vitesse de marche avant (G1) est maintenue enclenchée et
- dans une orientation du véhicule automobile (1) en pente descendante, qui est appelée ci-après position en descente, une vitesse de marche arrière (G_Rück) est maintenue enclenchée à la place de la vitesse de marche avant (G1),
**caractérisé en ce que** dans un rapport de position neutre (N),
- dans une orientation du véhicule automobile (1) en position en montée, la vitesse de marche avant (G1) est maintenue enclenchée et
- dans une orientation du véhicule automobile en position en descente, la vitesse de marche arrière (G_Rück) est maintenue enclenchée à la place de la vitesse de marche avant (G1).

2. Procédé selon la revendication 1, **caractérisé en ce que** la vitesse de marche avant enclenchée (G1) dans le rapport de stationnement (P) et le rapport de position neutre (N) est la plus petite des vitesses de marche avant (G1, ..., G6).

3. Procédé selon la revendication 1 ou 2, **caractérisé en ce que** la vitesse de marche arrière enclenchée (R) est la plus petite de plusieurs vitesses de marche arrière, dans la mesure où il existe plusieurs vitesses de marche arrière.

4. Procédé selon l'une quelconque des revendications 1 à 3, **caractérisé en ce que** dans la position en montée, dans un rapport de marche arrière (R), la vitesse de marche avant (G1) est maintenue enclenchée tant qu'un frein de service du véhicule automobile (1) est maintenu serré.

5. Procédé selon l'une quelconque des revendications 1 à 4, **caractérisé en ce que** la boîte de vitesses automatisée est une boîte de vitesses à double embrayage (5), qui comprend une première boîte de vitesses partielle (10) à laquelle sont associés un premier embrayage (11) et un premier groupe de vitesses (G1, G3, G5, G_Rück), et une deuxième boîte de vitesses partielle (20) à laquelle sont associés un deuxième embrayage (21) et un deuxième groupe de vitesses (G2, G4, G6), la vitesse de marche arrière (G_Rück) et la plus petite vitesse de marche avant (G1) étant associées à la première boîte de vitesses partielle (10).

6. Procédé selon la revendication 5, **caractérisé en ce qu'**une deuxième plus petite vitesse de marche avant (G2), qui est associée à la deuxième boîte de vitesses partielle (20), est maintenue enclenchée dans la position de montée et/ou de descente dans le rapport de stationnement (P) et dans le rapport de position neutre (N).

7. Procédé selon l'une quelconque des revendications 5 ou 6, **caractérisé en ce que** dans la position de descente, dans un rapport de marche avant (D), la vitesse de marche arrière (G_Rück) est maintenue enclenchée tant que le frein de service du véhicule automobile est maintenu serré.

8. Procédé selon la revendication 6 ou 7, **caractérisé en ce que** dans une position horizontale du véhicule automobile (1), dans le rapport de position neutre (N), la plus petite vitesse de marche avant (G1) et la deuxième plus petite vitesse de marche avant (G2) sont maintenues enclenchées, notamment si le rapport de marche choisi préalablement était le rapport de marche arrière (R).

9. Procédé selon la revendication 8, **caractérisé en ce que** dans une position horizontale du véhicule automobile (1), dans le rapport de position neutre (N), la deuxième plus petite vitesse de marche avant (G2) est maintenue enclenchée si le rapport de marche choisi préalablement était le rapport de marche avant (D).
